(19) **Europäisches Patentamt / European Patent Office / Office européen des brevets**

(11) **EP 3 018 447 B1**

(12) **FASCICULE DE BREVET EUROPEEN**

(45) Date de publication et mention de la délivrance du brevet:
**01.03.2017 Bulletin 2017/09**

(51) Int Cl.:
***G01C 21/16*** *(2006.01)*     ***G01S 19/20*** *(2010.01)*

(21) Numéro de dépôt: **15193389.2**

(22) Date de dépôt: **06.11.2015**

(54) **PROCÉDÉ DE DÉTERMINATION D'UN RAYON DE PROTECTION ASSOCIÉ À UN PARAMÈTRE DE NAVIGATION D'UN SYSTÈME HYBRIDE DE NAVIGATION INERTIELLE, ET SYSTÈME ASSOCIÉ**

VERFAHREN ZUR BESTIMMUNG EINES SCHUTZFELDRADIUS, DER MIT EINEM NAVIGATIONSPARAMETER EINES HYBRID-TRÄGHEITSNAVIGATIONSSYSTEMS ASSOZIIERT IST, UND ENTSPRECHENDES SYSTEM

METHOD FOR DETERMINING A RADIUS OF PROTECTION ASSOCIATED WITH A NAVIGATION PARAMETER OF A HYBRID INERTIAL NAVIGATION SYSTEM, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2014 FR 1402530**

(43) Date de publication de la demande:
**11.05.2016 Bulletin 2016/19**

(73) Titulaire: **THALES**
**92400 Courbevoie (FR)**

(72) Inventeurs:
• **COATANTIEC, Jacques**
**26210 FAUCONNIERES (FR)**
• **VERCIER, Nicolas**
**26000 VALENCE (FR)**

(74) Mandataire: **Brunelli, Gérald**
**Marks & Clerk France**
**Immeuble Visium**
**22, avenue Aristide Briand**
**94117 Arcueil Cedex (FR)**

(56) Documents cités:
**EP-A1- 2 299 287**     **EP-A1- 2 706 379**
**WO-A1-03/029755**     **WO-A1-2014/170478**
**US-A1- 2014 292 574**

**Description**

La présente invention porte sur un procédé de détermination d'au moins un rayon de protection respectivement associé à un paramètre de navigation d'un système hybride de navigation inertielle, et sur un système associé.

La présente invention peut être mise en oeuvre dans le domaine aéronautique, comme dans la suite de la description, mais peut également être mis en oeuvre dans tout autre domaine de navigation.

Un problème consiste à fournir des paramètres de navigation (comme vitesse et attitude) intègres au pilote, i.e. consiste à connaitre le ou les paramètres de navigation et avoir un rayon de protection respectivement associé à ce paramètre. Un rayon de protection donne une incertitude associée au paramètre de navigation : autrement dit, le pilote sait que l'erreur sur le paramètre de navigation ne peut pas être supérieure au rayon de protection avec une probabilité donnée.

Il est connu le document US2014074397, qui divulgue un procédé pour fournir l'intégrité d'un système de navigation hybride utilisant un filtre de Kalman. Le procédé consiste à déterminer une solution de navigation principale pour au moins un paramètre parmi le roulis, le tangage, cap de la plate-forme, ou le cap pour le véhicule en utilisant des signaux provenant d'une pluralité de satellites GNSS (acronyme de "Global Navigation Satellite System" pour système de navigation par satellites en langue anglaise) et les mesures inertielles. Une séparation de solution est utilisée pour déterminer une pluralité de sous-solutions pour la solution de navigation principale. Ce procédé comprend également la détermination d'une séparation entre la solution de navigation principale et chacune des sous-solutions, et un discriminateur pour chacune des séparations. Le procédé comprend également la détermination d'une variance de séparation entre la solution de navigation principale et chacune des sous-solutions, un seuil de détection d'une panne de satellite sur la base de la séparation des variances; et une limite de protection qui délimite une erreur dans la solution de navigation principale en fonction du seuil.

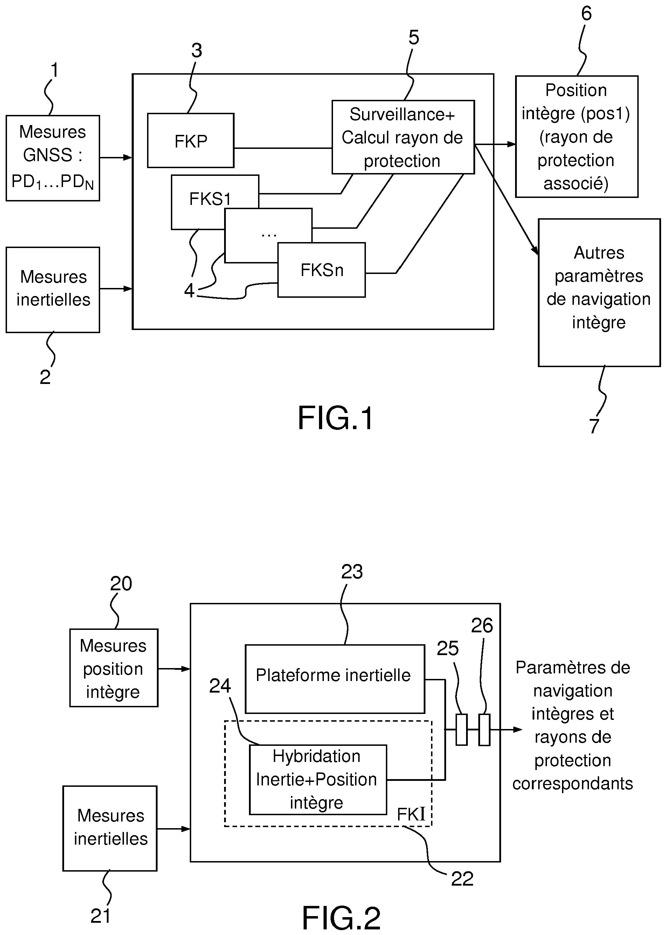

Un tel procédé est illustre sur la figure 1, sur laquelle le procédé reçoit en entrée des mesures 1 de pseudo-distances $PD_1$, $PD_2$, ...$PD_N$ fournies par un système de navigation par satellites ou GNSS pour acronyme de "Global Navigation Satellite System" en langue anglaise, ainsi que des mesures inertielles 2 comprenant la position, la vitesse, l'attitude, et l'altitude du système hybride de navigation inertielle. Le procédé comprend un filtrage 3 de Kalman principal FKP et une pluralité de filtrages 4 secondaires FKSi (i variant de 1 à n), et une étape 5 de surveillance et de calcul de rayon de protection. Le procédé fournit en sortie une position intègre et un rayon de protection associé 6, ainsi que d'autres paramètres de navigation intègres 7.

La fourniture d'une vitesse intègre ou d'attitudes intègres nécessite un modèle de variation à court terme des mesures de pseudo-distances en entrée et un taux de panne de satellite non détecté associé à ces variations à court terme présente les inconvénients qui suivent.

Le taux de panne de satellite non détectées de $10^{-4}$/h est fourni vis-à-vis d'erreurs d'amplitudes et non des variations à court terme pouvant affecter la vitesse ou les attitudes.

Il n'existe pas de modèle de variations à court terme valable des pseudo-distances dans les normes.

Dans de tel procédés, on subit les variations à court terme des erreurs GNSS, par exemple GPS, non modélisées (celles-ci sont bien entendu lissées par l'inertie mais on ne peut dire dans quelle proportion). Le rayon de protection associé à la vitesse ne couvre que certains types de pannes et non les pannes liées à des variations à court terme.

Le document WO 03/029755 A1 divulgue un procédé de détermination d'un rayon de protection associé à un paramètre de navigation d'un système hybride de navigation inertielle où une mesure de position intègre et une mesure inertielle du système hybride sont reçues en entrée du filtrage; une plateforme inertielle est réalisée à partir des mesures inertielles pour obtenir un paramètre de navigation; un filtrage de Kalman est réalisé avec une étape de recalage et une étape de propagation hybridant les données inertielles avec la position intègre reçue; le paramètre de navigation est calculé en ajoutant au paramètre de navigation inertiel issus de la plateforme inertiel les erreurs de navigation estimées du filtre de Kalman; le rayon de protection est calculé en utilisant la matrice de covariance du filtre de Kalman. Ce procédé opère sous l'hypothèse de mesures GPS très bruitées à court terme, pouvant être pris en compte à l'aide d'un rapport signal à bruit mesuré et fourni par le recepteur GPS.

Un but de la présente invention, est de pallier ces inconvénients notamment en ne faisant aucune hypothèse sur les variations à court terme des mesures GPS.

Il est proposé, selon un aspect de l'invention, un procédé de détermination d'au moins un rayon de protection respectivement associé à un paramètre de navigation d'un système hybride de navigation inertielle, par filtrage de Kalman comprenant les étapes consistant à:

- recevoir en entrée du filtrage une mesure de position intègre et une mesure inertielle du système hybride de navigation inertielle comprenant une mesure accélérométrique triaxiale et une mesure gyrométrique triaxiale;
- réaliser une plateforme inertielle à partir des mesures inertielles pour obtenir au moins un paramètre de navigation parmi un ensemble de paramètres comprenant la position, la vitesse, l'attitude, et l'altitude du système hybride de navigation inertielle;

- réaliser un filtrage de Kalman comprenant un recalage d'un vecteur d'états comprenant une estimation des erreurs du ou des paramètres de navigation et une matrice de covariance associée à ces états, une propagation du vecteur d'états, en hybridant les données de navigation inertielles avec la position intègre reçue au moyen des sous-étapes itératives suivantes:

  - effectuer un recalage du vecteur d'états basée sur une observation de la différence entre la mesure inertielle et la mesure de position intègre, dans lequel est introduit un biais de position dans le modèle d'états du filtre de Kalman, représentant l'incertitude associée à la position intègre mesurée en entrée;
  - décorréler l'état dudit biais de position de l'ensemble des autres états au moyen des sous-étapes suivantes:

    - en rendant indépendant l'état dudit biais de position des autres états pendant deux propagations successives en augmentant le bruit de modèle du biais de position;
    - en annulant les corrélations, présentes dans la matrice du filtre de Kalman, de cet état avec tous les autres états; et
    - en réinitialisant la covariance de l'état de biais de position avec l'incertitude de mesure de la position intègre en entrée ;

  - propager le vecteur d'états jusqu'à ce que la covariance associée à l'état d'erreur de position estimée par le filtre de Kalman égale la covariance associée au biais de position intègre;

- calculer le ou les paramètres de navigation intègres en ajoutant aux paramètres de navigation inertiels, issus de la plateforme inertielle, les erreurs de navigation estimées contenues dans le vecteur d'états du filtre de Kalman; et
- calculer le ou les rayons de protection respectivement associés audit ou auxdits paramètres de navigation intègres en utilisant la matrice de covariance du filtre de Kalman.

Un tel procédé permet de fournir des paramètres de navigation intègres, i.e. fournis avec leur rayon de protection respectivement associé sans faire d'hypothèses sur les mesures utilisées mis à part sur l'amplitude maximale de l'erreur qui les affecte.

Selon un mode de réalisation, l'étape consistant à recevoir en entrée du filtrage une mesure de position intègre utilise un système combinant inertie et un système de navigation par satellites.

Dans un mode de réalisation, l'étape consistant à recevoir en entrée du filtrage une mesure de position intègre utilise un système d'augmentation spatial.

Selon un autre aspect de l'invention, il est également proposé un système de détermination d'au moins un rayon de protection respectivement associé à un paramètre de navigation d'un système hybride de navigation inertielle, comprenant un filtre de Kalman, adapté pour mettre en oeuvre le procédé tel que précédemment décrit.

Selon un autre aspect de l'invention, il est également proposé un Aéronef comprenant un système tel que précédemment décrit.

L'invention sera mieux comprise à l'étude de quelques modes de réalisation décrits à titre d'exemples nullement limitatifs et illustrés par les dessins annexés sur lesquels :

- la figure 1 illustre schématiquement un procédé selon l'état de l'art ;
- les figures 2 et 3 illustrent schématiquement un procédé, selon un aspect de l'invention;
- les figures 4 à 9 représentent schématiquement des mesures prouvant les améliorations fournies par un procédé, selon un aspect de l'invention; et
- la figure 10 illustre schématiquement un mode de mise en oeuvre du procédé, selon un aspect de l'invention;

Sur l'ensemble des figures, les éléments ayant des références identiques sont similaires.

La figure 2 illustre schématiquement un procédé selon un aspect de l'invention, dans lequel le filtrage 22 de Kalman intègre FKI reçoit en entrée des mesures de position intègre 20 et des mesures inertielles 21. Le filtrage 22 de Kalman FKI utilise une plate-forme inertielle 23 et une hybridation 24 d'inertie et de position intègre pour délivrer en sortie des paramètres de navigation intègre et les rayons de protection correspondants.

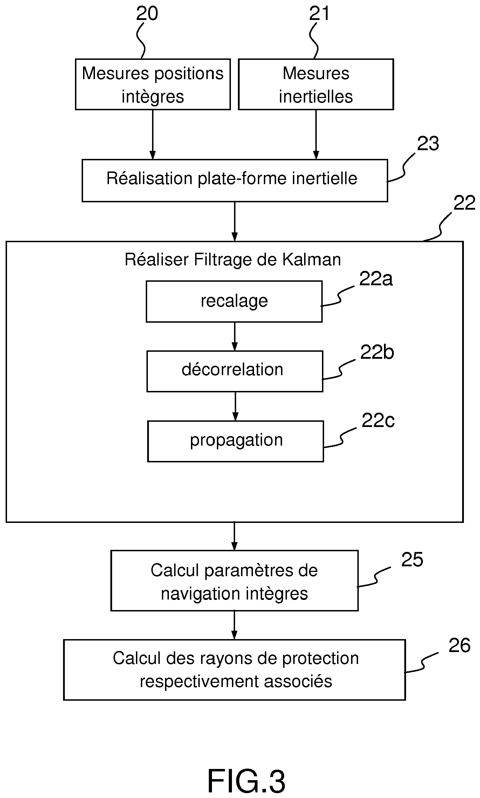

La figure 3 illustre de manière plus détaillée le procédé de la figure 2.

Le procédé de détermination d'au moins un rayon de protection respectivement associé à un paramètre de navigation d'un système hybride de navigation inertielle, par filtrage de Kalman comprend les étapes consistant à:

- recevoir en entrée du filtrage une mesure de position intègre 20 et une mesure inertielle 21 du système hybride de navigation inertielle comprenant une mesure accélérométrique triaxiale et une mesure gyrométrique triaxiale;
- réaliser une plateforme inertielle 23 à partir des mesures inertielles pour obtenir au moins un paramètre de navigation parmi un ensemble de paramètres comprenant la position, la vitesse, l'attitude, et l'altitude du système hybride de navigation inertielle;

- réaliser un filtrage de Kalman 22 comprenant un recalage d'un vecteur d'états comprenant une estimation des erreurs du ou des paramètres de navigation et une matrice de covariance associée à ces états, une propagation du vecteur d'états, en hybridant les données de navigation inertielles avec la position intègre reçue au moyen des sous-étapes itératives suivantes:

  - effectuer un recalage 22a du vecteur d'états basée sur une observation de la différence entre la mesure inertielle et la mesure de position intègre, dans lequel est introduit un biais de position dans le modèle d'états du filtre de Kalman, représentant l'incertitude associée à la position intègre mesurée en entrée;
  - décorréler 22b l'état dudit biais de position de l'ensemble des autres états au moyen des sous-étapes suivantes:

    - en rendant indépendant l'état dudit biais de position des autres états pendant deux propagations successives en augmentant le bruit de modèle du biais de position ;
    - en annulant les corrélations, présentes dans la matrice du filtre de Kalman, de cet état avec tous les autres états; et
    - en réinitialisant la covariance de l'état de biais de position avec l'incertitude de mesure de la position intègre en entrée ;

  - propager 22c le vecteur d'états jusqu'à ce que la covariance associée à l'état d'erreur de position estimée par le filtre de Kalman égale la covariance associée au biais de position intègre;

- calculer 25 le ou les paramètres de navigation intègres en ajoutant aux paramètres de navigation inertiels, issus de la plateforme inertielle, les erreurs de navigation estimées contenues dans le vecteur d'états du filtre de Kalman; et
- calculer 26 le ou les rayons de protection respectivement associés audit ou auxdits paramètres de navigation intègres en utilisant la matrice de covariance du filtre de Kalman.

L'étape consistant à recevoir en entrée du filtrage une mesure de position intègre 20 peut utiliser un système combinant inertie et un système de navigation par satellites ou un système d'augmentation spatial.

Ci-suit un exemple de réalisation détaillé, non limitatif, permettant de déterminer le paramètre de vitesse intègre.

Le calcul de la vitesse intègre se fait en utilisant un filtre d'hybridation (appelé VIKF pour "velocity integrity kalman filter" en langue anglaise ou FC pour "filtre coasting" en langue anglaise) qui recale sur la position de la localisation (latitude et longitude). A la mesure, on ajoute un biais sans bruit de modèle, avec une propagation fixe et qui est décorrélée des autres états entre chaque mesure. Il y a deux états de biais: un état pour la latitude et un état pour la longitude. Dans la suite de la description, on se concentre sur un seul état de biais, le deuxième fonctionnant de la même manière. Le but de la décorrélation est d'empêcher le filtre d'estimer le biais tout en tenant compte de cette erreur potentielle dans chaque mesure utilisée.

Le fait de décorréler, entre deux mesures successives, le biais n'est normalement représentatif de la réalité que si le biais est complètement indépendant entre deux mesures. Il y a donc deux possibilités :

- soit le biais réel est complètement différent entre deux mesures successives et donc dans ce cas le modèle est complètement valable.
- soit le biais réel n'est pas du tout indépendant entre deux mesures. Il est alors possible de considérer par exemple que le biais est une constante. On se concentre sur ce cas dans lequel la réalité s'écarte le plus du modèle utilisé pour réaliser le filtre de Kalman.

La mesure peut être :

- soit la position de la localisation (filtre principal qui utilise régulièrement les mesures GPS (exemple de GNSS)) associée à son rayon d'intégrité nommé PLFDSIS pour acronyme de Protection Level Fault Detection Signal In Space" en langue anglaise.
- soit une position intègre (par exemple une position de système d'augmentation spatial SBAS) associée à son rayon d'intégrité HIL.

La covariance du biais est initialisée à la valeur maximale d'incertitude (la valeur du rayon d'intégrité) suivant un axe (valeur maximale d'erreur de position avant détection) multipliée par un facteur CoefAdaptation à définir (ce facteur peut être >1 ou < 1). La valeur de ce facteur peut être fixée à $1/\text{sqrt}(2) = \frac{1}{\sqrt{2}}$ pour prendre en compte le fait que l'on travaille suivant chaque axe (longitude, latitude).

Tant que la covariance de position n'a pas atteint la covariance du biais on ne prend pas en compte de nouvelle mesure dans le filtre qui gère l'intégrité (avec de manière facultative un minimum de temps nommé TimeUpdateFC). C'est le point majeur de ce filtre qui le rend valable. Car si le biais ne bouge pas entre deux mesures, c'est l'état de position qui aurait bougé et l'hypothèse d'indépendance sur le biais entre deux mesures successives est toujours valable d'un point de vue du filtre. On s'assure également que la covariance de position ne converge pas de manière artificielle car elle sera toujours supérieure à la covariance du biais divisée par deux.

Plus le minimum de temps TimeUpdateFC est grand, moins le résultat est sensible au variations rapides de position: en effet, en faisant ainsi, l'erreur de mesure sur la vitesse est au maximum égale au rapport Erreur de position / TimeUpdateFC. Néanmoins plus le minimum de temps TimeUpdateFC est grand, plus on reste sur l'inertie sans recalage et donc on subit les erreurs de l'inertie pendant TimeUpdateFC.

Plus le facteur CoefAdaptation est grand, moins on fait confiance à la mesure de position donc: le filtre est plus robuste à des erreurs de position, mais le rayon de protection associé à la vitesse est plus grand

Ci-suit maintenant l'étude de la covariance de vitesse

On note :

P la matrice de covariance du filtre VIKF

H la matrice d'observation pour la mesure de position X biaisée

K le gain du filtre de Kalman

R le bruit de mesure de position

n le nombre d'états du filtre

X1 l'état de position X sur lequel a lieu le recalage, X2 l'état de vitesse X, Xi le ième état, Xn=Xb le Nième état égal au biais X de recalage.

VarXi la variance associée à l'état i

VarXiXj la covariance entre les états i et j

Ci-suit la description de la phase de recalage, représenté par l'indice rec.

$$H = \begin{bmatrix} 1 & 0 & ... & 0 & 1 \end{bmatrix}$$

Au moment du recalage on a :

$$K = P^p.H^T.\text{inv}(HP^pH^T+R)$$

L'indice T représentant la fonction transposée (à conformer) d'une matrice, et L'indice p représentant la phase de propagation. $P^P = \begin{bmatrix} \text{VarX1} & \text{VarX1X2} & ... & 0 \\ \text{VarX1X2} & ... & ... & 0 \\ ... & ... & ... & 0 \\ 0 & 0 & 0 & \text{VarXn} \end{bmatrix}$ car Xn est décorrélé de tous les autres états.

Soit :

$$P^P.H^T = \begin{bmatrix} \text{VarX1} \\ \text{VarX1X2} \\ ... \\ \text{VarX1Xn} - 1 \\ \text{VarXn} \end{bmatrix}$$

et

$$K = \frac{1}{VarX1+VarXn+R} \begin{bmatrix} VarX1 \\ VarX1X2 \\ ... \\ VarX1Xn-1 \\ VarXn \end{bmatrix}$$

Ainsi on peut calculer la matrice de covariance du filtre VIKF recalée $P^{rec} = P^P - KHP^P$ :

$$HP = \begin{bmatrix} VarX1 & VarX1X2 & VarX1X3 & ... & VarX1Xn-1 & VarXn \end{bmatrix}$$

Soit

$$P^{rec} = \begin{bmatrix} VarX1 & VarX1X2 & ... & 0 \\ VarX1X2 & ... & ... & 0 \\ ... & ... & ... & 0 \\ 0 & 0 & 0 & VarXn \end{bmatrix} -$$
$$\frac{1}{VarX1+VarXn+R} \begin{bmatrix} VarX1^2 & VarX1.VarX1X2 & ... & ... \\ VarX1.VarX1X2 & VarX1X2^2 & ... & ... \\ ... & ... & ... & ... \\ ... & ... & ... & VarXn \end{bmatrix}$$

Donc, en s'intéressant à la covariance de position, on a:

$$VarX1rec = VarX1 - \frac{1}{VarX1 + VarXn + R} VarX1^2$$

Le recalage a lieu lorsque VarX1 =VarXn donc :

$$VarX1rec = VarXn - \frac{1}{2.VarXn + R} VarXn^2$$

Comme R<<VarXn au moment du recalage on a :

$$VarX1rec = VarXn - \frac{1}{2.VarXn} VarXn^2 = \frac{VarXn}{2}$$

VarXn est connu puisque l'on prend l'incertitude maximal suivant l'axe considéré. En première approximation pour les simulations on a pris le rayon de protection protégeant contre les pannes satellites PLFDSIS sur chaque axe, PLFDSIS pour acronyme de "Protection Level Fault Detection Signal In Space".
Au niveau de la vitesse on a :

$$VarX2rec = VarX2 - \frac{1}{VarX1 + VarXn + R} VarX1X2^2$$

Au niveau de la corrélation vitesse et position on a :

$$VarX1X2rec = VarX1X2 - \frac{1}{VarX1 + VarXn + R} VarX1.VarX1X2$$

Donc on aboutit aux trois équations suivantes :

$$VarX1rec = VarX1 - \frac{1}{VarX1 + VarXn + R} VarX1^2 \qquad (1)$$

$$VarX2rec = VarX2 - \frac{1}{VarX1 + VarXn + R} VarX1X2^2 \qquad (2)$$

$$VarX1X2rec = VarX1X2 - \frac{1}{VarX1 + VarXn + R} VarX1.VarX1X2 \qquad (3)$$

Ci-suit la description de la propagation.

Pour la propagation on suppose un modèle à deux états (vitesse, position) avec un bruit de modèle sur la vitesse :

$$\dot{P} = FP + PF^T + Q \qquad \text{(équation de Riccatti)}$$

F représentant la matrice de propagation des erreurs, et
Q représentant la matrice des bruits associés au modèle.

Avec $F = \begin{bmatrix} 0 & 1 \\ 0 & 0 \end{bmatrix}$ et $Q = \begin{bmatrix} 0 & 0 \\ 0 & q \end{bmatrix}$ , q étant connu et représentant le bruit de modèle sur la vitesse.

$$P = \begin{bmatrix} VarX1 & VarX1X2 \\ VarX1X2 & VarX2 \end{bmatrix}$$

Ce qui donne :

$$\dot{VarX1} = 2VarX1X2$$

$$\dot{VarX2} = q$$

$$\dot{VarX1X2} = VarX2$$

Soit :

$$VarX2 = VarX2rec + q.T \qquad (4)$$

$$VarX1X2 = VarX1X2rec + VarX2rec.T + q.T^2/2 \qquad (5)$$

$$VarX1 = VarX1rec + 2VarX1X2rec.T + VarX2rec.T^2 + q.T3/3 \qquad (6)$$

T représentant le temps de propagation entre deux recalages.

Ci-suit la description de la résolution :

On connaît q, VarX1, VarX1 rec et il faut trouver VarX2, VarX2rec, VarX1 X2, VarX1 X2rec et T.

On dispose de cinq équations pour cinq inconnus, l'équation (6) ayant été utilisée pour trouver VarX1 rec.
Appelons S la variable : CoefAdaptation*VarXn. Cette variable est connue. Supposons que R<<S on alors:

$$VarX1 = S.$$

$$VarX1rec = S/2.$$

En reportant l'équation (4) dans l'équation (2) on a :

$$VarX2rec = VarX2rec + qT - \frac{1}{2S}VarX1X2^2$$

Soit

$$VarX1X2 = \sqrt{2SqT}$$

En utilisant l'équation (3), on obtient alors :

$$VarX1X2 = \sqrt{2SqT} - \frac{1}{2S}S\sqrt{2SqT} = \frac{1}{2}\sqrt{2SqT}$$

En utilisant l'équation (5) on obtient :

$$\sqrt{2SqT} = \frac{1}{2}\sqrt{2SqT} + VarX2rec.\,T + q\frac{T^2}{2}$$

$$VarX2rec = \frac{1}{2}\sqrt{2S}\sqrt{\frac{q}{T}} - \frac{1}{2}qT = \frac{1}{2}\frac{\left(\sqrt{2SqT} - qT^2\right)}{T}$$

En utilisant l'équation (4) on obtient :

$$VarX2 = \frac{1}{2}\sqrt{2S}\sqrt{\frac{q}{T}} - \frac{1}{2}qT + qT = \frac{1}{2}\sqrt{2S}\sqrt{\frac{q}{T}} + \frac{1}{2}qT = \frac{1}{2}\frac{\left(\sqrt{2SqT} - qT^2\right)}{T}$$

Les expressions de VarX2rec et VarX2 ne sont pas très parlantes car on ne connaît pas T, on va maintenant calculer T à partir de l'équation (6):

$$S = \frac{S}{2} + \sqrt{2SqT}.\,T + \frac{1}{2}\sqrt{2SqT}.\,T - \frac{1}{2}qT^3 + \frac{1}{3}qT^3$$

soit :

$$-\frac{1}{6}qT^3 + \frac{3}{2}\sqrt{2Sq}.\,T^{\frac{3}{2}} - \frac{S}{2} = 0$$

3 On pose $X = T^{\frac{3}{2}}$ pour avoir une équation du second ordre dont les racines sont :

$$\sqrt{\frac{S}{q}}\left(9\frac{\sqrt{2}}{2}+3\sqrt{\frac{25}{6}}\right) \quad \text{et} \quad \sqrt{\frac{S}{q}}\left(9\frac{\sqrt{2}}{2}-3\sqrt{\frac{25}{6}}\right)$$

La valeur de T est obtenue pour la valeur la plus faible c'est à dire :

$$\left(\sqrt{\frac{S}{q}}\left(9\frac{\sqrt{2}}{2}-3\sqrt{\frac{25}{6}}\right)\right)^{2/3}$$

On note : $\alpha = \left(9\frac{\sqrt{2}}{2}-3\sqrt{\frac{25}{6}}\right)^{2/3}$ , $\alpha \approx -0.386$ ainsi :

$$T = \alpha.\left(\frac{S}{q}\right)^{\frac{1}{3}} \quad \text{ou} \quad q = \frac{S}{T^3}\alpha^3$$

On réécrit VarX2rec en fonction de S et T :

$$\text{VarX2rec} = \frac{1}{2}\sqrt{2S}\sqrt{\frac{q}{T}} - \frac{1}{2}qT = \frac{1}{2}\sqrt{2S}\alpha^{\frac{3}{2}}\sqrt{\frac{S}{T^4}} - \frac{1}{2}\frac{S}{T^2}\alpha^3 = \frac{S}{T^2}\left(\frac{\sqrt{2}}{2}\alpha^{\frac{3}{2}} - \frac{1}{2}\alpha^3\right) \qquad (7)$$

$$\text{VarX2} = \frac{S}{T^2}\left(\frac{\sqrt{2}}{2}\alpha^{\frac{3}{2}} + \frac{1}{2}\alpha^3\right) \qquad (8)$$

On note $\beta = \left(\frac{\sqrt{2}}{2}\alpha^{\frac{3}{2}} - \frac{1}{2}\alpha^3\right)$, β étant environ égal à 0.1410 et la racine carrée de β vaut environ 0.3755. On note :

$\gamma = \left(\frac{\sqrt{2}}{2}\alpha^{\frac{3}{2}} + \frac{1}{2}\alpha^3\right)$, γ est environ égal à 0.1987 et la racine carrée de γ vaut environ 0.4458.

Enfin on calcule le coefficient de corrélation Corr entre X1 et X2 :

$$\text{VarX1X2}^2 = 2\text{SqT} = 2\frac{S^2}{T^2}\alpha^3 = S.\text{Corr.}\frac{S}{T^2}\left(\frac{\sqrt{2}}{2}\alpha^{\frac{3}{2}} + \frac{1}{2}\alpha^3\right)$$

On obtient donc :

$$\text{Corr} = \frac{2\alpha^3}{\left(\frac{\sqrt{2}}{2}\alpha^{\frac{3}{2}}+\frac{1}{2}\alpha^3\right)}, \quad \text{et} \quad \text{Corr\_rec} = \frac{\alpha^3}{\left(\frac{\sqrt{2}}{2}\alpha^{\frac{3}{2}}-\frac{1}{2}\alpha^3\right)}$$

Corr est environ égal à :0.58
Corr_rec est environ égal à :0.409

Enfin, on détermine VarX2 et VarX2rec à partir de S et q qui sont les principales entrées :

$$\text{VarX2rec} = \frac{\beta}{\alpha^2}S^{\frac{1}{3}}q^{\frac{2}{3}} \text{ :(9)}, \frac{\beta}{\alpha^2} \text{ est environ égal à 0.94}$$

$$VarX2 = \frac{\gamma}{\alpha^2} S^{\frac{1}{3}} q^{\frac{2}{3}} : (10), \frac{\gamma}{\alpha^2} \text{ est environ égal à } 1.33$$

En synthèse, on a :

$$VarX1 = S \qquad (1f)$$

$$VarX1rec = \frac{S}{2} \quad (2f)$$

$$VarX2 = \gamma \frac{S}{T^2} \qquad \text{avec } \gamma \text{ environ égal à } 0.1987 \quad (3f)$$

$$VarX2rec = \beta \frac{S}{T^2} \qquad \text{avec } \beta \text{ environ égal à } 0.1410 \qquad (4f)$$

$$VarX2 = \frac{\gamma}{\alpha^2} S^{\frac{1}{3}} q^{\frac{2}{3}} \quad (10), \frac{\gamma}{\alpha^2} \text{ est environ égal à } 1.33 \qquad (5f)$$

$$VarX2rec = \frac{\beta}{\alpha^2} S^{\frac{1}{3}} q^{\frac{2}{3}} \quad (9), \frac{\beta}{\alpha^2} \text{ est environ égal à } 0.94 \quad (6f)$$

$$Corr = \frac{2\alpha^3}{\left(\frac{\sqrt{2}}{2}\alpha^{\frac{3}{2}} + \frac{1}{2}\alpha^3\right)}, \qquad Corr \text{ est environ égal à } 0.58 \qquad (7f)$$

$$Corr\_rec = \frac{\alpha^3}{\left(\frac{\sqrt{2}}{2}\alpha^{\frac{3}{2}} - \frac{1}{2}\alpha^3\right)}, \quad Corr\_rec \text{ est environ égal à } 0.409 \qquad (8f)$$

$$T = \alpha.\left(\frac{S}{q}\right)^{\frac{1}{3}} \text{ ou } q = \frac{S}{T^3}\alpha^3 \text{ avec } \alpha \approx 0.386 \quad (9f)$$

Les formules 3f et 4f montrent que le filtre ne converge pas mieux que l'incertitude sur la position intègre en entrée divisée par le produit du temps entre deux recalages et d'un coefficient en sigma égal à sqrt(0.1987) = 0.4458.
Regardons ce qui se passe au niveau du recalage de vitesse en supposant qu'il n'y ait aucune erreur sur le filtre FC avant recalage et que le filtre donnant la mesure soit corrompu avec une erreur de position égale à
On raisonne avec un filtre qui n'est pas un filtre aux écarts :

Au niveau des équations on a :

$$X1rec(n) = X1(n-1) + 1/2 \cdot (\sqrt{S} - X1(n-1))$$

$$X2rec(n) = X2(n-1) + \frac{1}{2}\sqrt{2}\alpha^{\frac{3}{2}}\frac{1}{T}(\sqrt{S}-X1(n-1))$$

$$X1(n) = X1rec(n) + X2rec(n)*T$$

$$X2(n) = X2rec(n)$$

Soit:

$$X1(n) = X1(n-1) + 1/2*(\sqrt{S}-X1(n-1)) + (X2(n-1)T + \frac{1}{2}\sqrt{2}\alpha^{\frac{3}{2}}(\sqrt{S}-X1(n-1)))$$

$$X1(n) = X1(n-1).\left(\frac{1}{2} - \frac{1}{2}\sqrt{2}\alpha^{\frac{3}{2}}\right) + X2(n-1)T + \sqrt{S}.\left(\frac{1}{2} + \frac{1}{2}\sqrt{2}\alpha^{\frac{3}{2}}\right)$$

$$X2(n) = X2(n-1) + \frac{1}{2}\sqrt{2}\alpha^{\frac{3}{2}}\frac{1}{T}(\sqrt{S}-X1(n-1))$$

On pose:

$$b = \frac{1}{2}\sqrt{2}\alpha^{\frac{3}{2}} = 0.1698$$

Ce qui donne en posant:

$$Un = \begin{bmatrix} X1(n) \\ X2(n) \end{bmatrix}$$

$$Un = \begin{bmatrix} \frac{1}{2} - b & T \\ -\frac{b}{T} & 1 \end{bmatrix} U_{n-1} + \sqrt{S} \begin{bmatrix} \frac{1}{2} + b \\ \frac{b}{T} \end{bmatrix}$$

On cherche le maximum d'erreur de vitesse sur X2 :

Le maximum est atteint au deuxième coup d'itération soit : L'erreur sur X2 vaut au max : $\frac{\sqrt{S}}{T}\left(\frac{3}{2}b - b^2\right)$ (10f) avec $\left(\frac{3}{2}b - b^2\right) \approx 0.226$.

L'erreur de vitesse maximale est égale à $0.226*\frac{\sqrt{S}}{T}$ pour un écart type de $0.375*\frac{\sqrt{S}}{T}$.

Ceci démontre qu'il est légitime d'utiliser un tel filtre étant donné que la covariance borne toujours l'erreur pour la partie application d'une erreur sur la mesure; dans ce cas il s'agit d'une erreur constante. En ce qui concerne les erreurs statistiques des capteurs il faut multiplier l'écart-type par un coefficient adapté pour avoir la probabilité associée au rayon de protection voulu.

Cela démontre que lorsque la panne appliquée est constante et vaut $\sqrt{S}$ alors l'erreur maximale vaut $0.226 * \frac{\sqrt{S}}{T}$ tandis que l'incertitude sur la position vaut $0.375 * \frac{\sqrt{S}}{T}$.

On peut s'interroger sur la forme d'erreur en entrée qui maximise l'erreur en sortie :

En reprenant les équations :

$$Un = \begin{bmatrix} X1(n) \\ X2(n) \end{bmatrix}$$

$$Un = \begin{bmatrix} \frac{1}{2} - b & T \\ -\frac{b}{T} & 1 \end{bmatrix} U_{n-1} + en \begin{bmatrix} \frac{1}{2} + b \\ \frac{b}{T} \end{bmatrix} = AU_{n-1} + en.U$$

Avec l'erreur en entrée on a, en supposant que $U_0 = 0$ :

$$Un = \sum_{j=0}^{n-1} [A^j U] e_{n-1-j}$$

En supposant que l'amplitude maximale de l'entrée vaut $\sqrt{S}$, $U_n$ sera donc maximum lorsque $e_{n-1-j} = \sqrt{S}$ si $[A^j U](2)$ est positif et $e_{n-1-j} = -\sqrt{S}$ si $[A^j U](2)$ est négatif. On note V(i), la i$^{ème}$ composante du vecteur V.

On va montrer également que Un se met sous la forme $\alpha \frac{\sqrt{S}}{T}$ où $\alpha$ est une constante indépendante de $\sqrt{S}$ et T :

Les valeurs propres de A sont indépendantes de T puisque le polynôme donnant les valeurs propres vaut $\left(\frac{1}{2} - b - X\right)(1 - X) + b$. On rappelle que b est une constante.

On montre également aisément que les vecteurs propres peuvent s'écrire sous la forme $\begin{bmatrix} 1 & 1 \\ \frac{a}{T} & \frac{\bar{a}}{T} \end{bmatrix}$, dans laquelle a est une constante

Si on note $\lambda1$ et $\lambda2$ les valeurs propres de A on a :

$$[A^j U] = \frac{1}{2i\text{Im}(a)} \begin{bmatrix} -\lambda1^j \bar{a} + \lambda2^j a & (\lambda1^j - \lambda2^j)T \\ a\bar{a}(\lambda2^j - \lambda1^j)\frac{1}{T} & \lambda1^j a - \lambda2^j \bar{a} \end{bmatrix} \begin{bmatrix} \frac{1}{2} + b \\ \frac{b}{T} \end{bmatrix}$$

Im(a) correspond à la partie imaginaire de a.

On voit donc que $[A^j U](2)$ est sous la forme $\frac{\beta j}{T}$ ce qui montre que Un se met sous la forme $\alpha \frac{\sqrt{S}}{T}$.

On calcule empiriquement la valeur de $\alpha$ : 0.48

Donc on obtient une erreur maximale de $0.48 * \frac{\sqrt{S}}{T}$ pour un écart type de $0.375 * \frac{\sqrt{S}}{T}$. Comme on prend 5 fois l'écart type pour fournir un rayon intègre (pour couvrir les erreurs rares et normales), on couvre largement le besoin.

Une application de la présente invention peut être à une inertie de navigation dans l'aéronautique civile. Un exemple peut être le calcul du rayon de vitesse.

Pour anticiper la valeur de la covariance de vitesse, il faut pouvoir déterminer la valeur de S et la valeur de Q.

S vaut, en considérant que le PLFDSIS est réparti sur les deux axes : (PLFDSIS/sqrt(2))$^2$. On fait varier cette valeur entre $50^2/2$ m$^2$ et $277^2/2$ m$^2$.

En ce qui concerne la valeur de Q, la grande partie de décorrelation appliquée sur la vitesse est liée à l'erreur $\psi$ valant la somme d'erreur de position en angle et d'erreur d'attitude.

Cette erreur $\psi$ est en grande partie liée à l'erreur d'attitude et vaut entre 50 $\mu$rad et 100 $\mu$rad (pour des capteurs utilisés en navigation aéronautique) :

$$Vn+1 = Vn + g.\ \psi.T \text{ (en négligeant les autres termes d'erreurs)}$$

D'où, on a :

$$Cov(Vn+1) = Cov(Vn)+Cov(g.\ \psi.T)+2.corr.sqrt(Cov(Vn).Cov(g.\ \psi.T))$$

Cov(X) représentant la covariance associée à l'état X

On a: Pvit = Pvit + $g^2*Cov(\psi)*T^2$ en négligeant le dernier terme. Pvit représentant Cov(Vn)

Les ordres de grandeurs sont les suivants:

T = 100s, Cov($\psi$) = $10^{-8}$ rad$^2$, g = 10 m/s$^2$, sqrt(Cov(Vn)) = 0.02m/s, Corr = 1 =>

$$g^2 \times Cov(\psi) \times T^2 = 0.01 \ (m/s)^2$$

$$2.corr.sqrt(Cov(Vn).Cov(g.\ \psi.T)) = 0.004 \ (m/s)^2$$

On voit qu'il ne s'agit pas d'un simple ajout de bruit de modèle contrairement au modèle utilisé précédemment. Pour se ramener au cas étudié précédemment, on construit un Q équivalent, égal à :

$$Q = g^{2*}Cov(\psi)^*T.$$

On peut ainsi calculer T à partir de l'équation 9f :

$$T = \alpha.\left(\frac{S}{g^2*Cov(\psi)*T}\right)^{\frac{1}{3}} \qquad \text{soit} \qquad T = \alpha^{\frac{3}{4}}.\left(\frac{S}{g^2*Cov(\psi)}\right)^{\frac{1}{4}}$$

On calcule alors l'écart-type comme suit (en multipliant par $\sqrt{2}$ pour avoir un rayon horizontal et en multipliant par 5 pour avoir une intégrité à $10^{-7}$/h) :

$$HIVL = 5\sqrt{2.VarX2} = 5\sqrt{2\gamma\frac{S}{T^2}}$$

Une application numérique donne :

$$S = 277^2/2 \ m^2$$
$$Cov(\psi) = 100.10^{-6} \ rad^2$$
$$=>$$
$$T = 216 \ s$$
$$HIVL = 2.8463 \ m/s$$

$$S = 50^2/2 \text{ m}^2$$

$$\text{Cov}(\psi) = 50.10\text{-}6 \text{ rad}^2$$

$$\Rightarrow$$

$$T = 130 \text{ s}$$

$$HIVL = 0.8551 \text{ m/s}$$

Ci-suivent des exemples de simulation sur un simulateur complet d'une navigation aéronautique civile.

A t = 4500s, une erreur GPS sur tous les axes satellites est appliquée. On regarde ce qui se passe sur un filtre classique et sur le filtre d'intégrité de la présente invention.

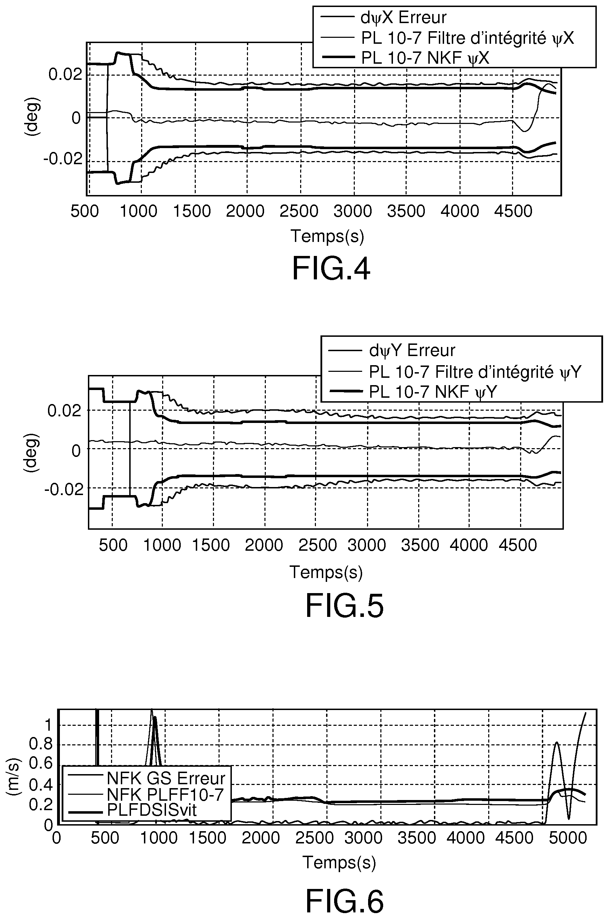

Les figures 4, 5 et 6 illustrent une simulation dans le cas d'un filtrage principal sans intégrité.

On voit que l'erreur de vitesse ou d'attitude dépasse les rayons de protection avec une intégrité de $10^{-7}$/h sur l'attitude et sur la vitesse.

Sur la figure 4, l'erreur d'attitude du filtre principal NKF suivant l'axe X dépasse le rayon d'intégrité du filtre principal (courbe en gras). Le rayon d'intégrité du filtre d'intégrité est donné à titre indicatif pour montrer que les valeurs sont relativement proches.

De même, sur la figure 5, pour l'erreur d'attitude suivant l'axe Y.

Sur la figure 6, l'erreur de vitesse par rapport au sol du NKF (GS pour acronyme de "ground speed" en langue anglaise), qui dépasse à la fois le rayon d'intégrité de protection contre les erreurs rares et normales (PLFF10-7 : Protection Level Fault Free) mais également le rayon d'intégrité de protection contre les pannes satellites non détectées (rayon de protection fourni suivant la méthode référencée dans la figure 1 : PLFDSISvit pour acronyme anglais de "Protection Level Fault Detection Signal In Space" en vitesse).

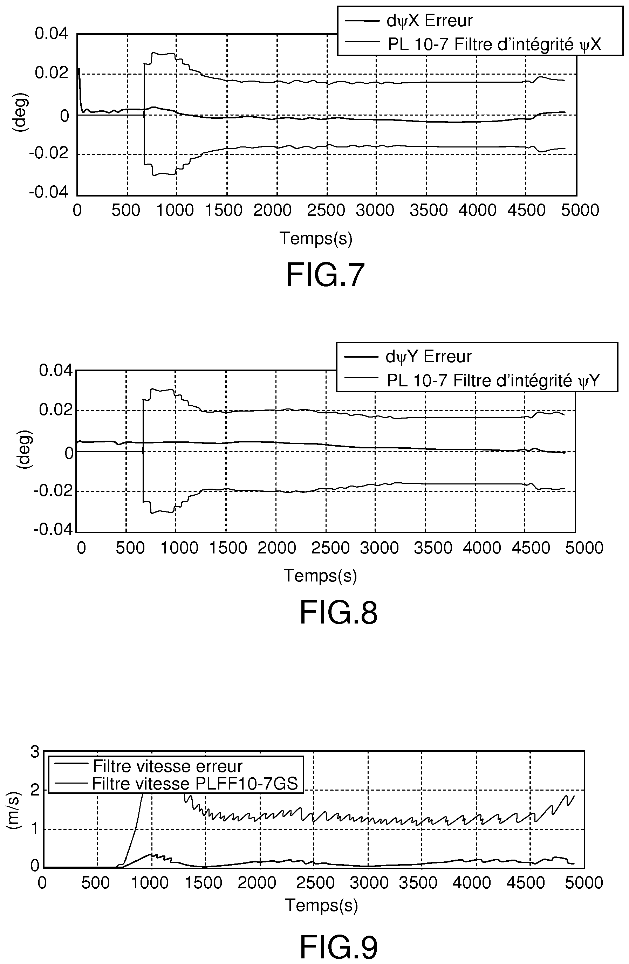

Les figures 7, 8 et 9 illustrent une simulation dans le cas d'un procédé selon l'invention, mettant en oeuvre le filtre d'intégrité.

On voit que l'erreur de vitesse ou d'attitude ne dépasse pas les rayons de protection de $10^{-7}$ sur l'attitude et sur la vitesse. En outre, les erreurs du filtre d'intégrité sont lissées.

Parmi les applications possibles, on peut par exemple citer la fourniture au pilote automatique d'un aéronef d'une vitesse intègre par rapport au sol d'un aéronef plus précise que les vitesses inertielles pures généralement utilisées, ou la fourniture à un calculateur de freinage d'une vitesse intègre par rapport au sol d'un aéronef plus précise que les vitesses inertielles pures généralement utilisées.

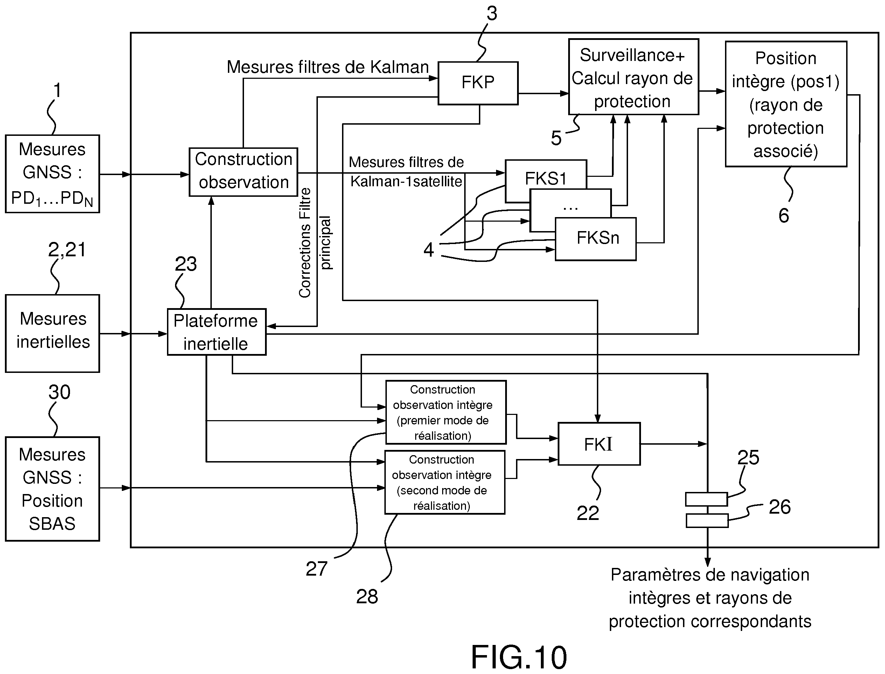

La figure 10 illustre une exemple de réalisation du procédé selon un aspect de l'invention, combinant le procédé de la figure 1, permettant de fournir des mesures de position intègre 20 procédé de l'invention de la figure 2. Sur cet exemple de réalisation, les éléments ayant une référence identique à ceux des figures 1 et 2, sont similaires. Deux modules 27 et 28 indiquent deux modes réalisations de l'invention utilisant deux mesures intègres différentes : soit une mesure intègre de position issue du filtre principal NKF, soit une mesure SBAS provenant du récepteur GPS.

## Revendications

1. Procédé de détermination d'au moins un rayon de protection respectivement associé à un paramètre de navigation d'un système hybride de navigation inertielle, par filtrage de Kalman comprenant les étapes consistant à :

   - recevoir en entrée du filtrage une mesure de position intègre (20) et une mesure inertielle (21) du système hybride de navigation inertielle comprenant une mesure accélérométrique triaxiale et une mesure gyrométrique triaxiale;
   - réaliser une plateforme inertielle (23) à partir des mesures inertielles pour obtenir au moins un paramètre de navigation parmi un ensemble de paramètres comprenant la position, la vitesse, l'attitude, et l'altitude du système hybride de navigation inertielle;
   - réaliser un filtrage de Kalman (22) comprenant un recalage d'un vecteur d'états comprenant une estimation des erreurs du ou des paramètres de navigation et une matrice de covariance associée à ces états, une propagation du vecteur d'états, en hybridant les données de navigation inertielles avec la position intègre reçue au moyen des sous-étapes itératives suivantes :

     - effectuer un recalage (22a) du vecteur d'états basée sur une observation de la différence entre la mesure inertielle et la mesure de position intègre, dans lequel est introduit un biais de position dans le modèle d'états du filtre de Kalman, représentant l'incertitude associée à la position intègre mesurée en entrée;

- décorréler (22b) l'état dudit biais de position de l'ensemble des autres états au moyen des sous-étapes suivantes:

- en rendant indépendant l'état dudit biais de position des autres états pendant deux propagations successives en augmentant le bruit de modèle du biais de position;
- en annulant les corrélations, présentes dans la matrice du filtre de Kalman, de cet état avec tous les autres états; et
- en réinitialisant la covariance de l'état de biais de position avec l'incertitude de mesure de la position intègre en entrée ;

- propager (22c) le vecteur d'états jusqu'à ce que la covariance associée à l'état d'erreur de position estimée par le filtre de Kalman égale la covariance associée au biais de position intègre;

- calculer (25) le ou les paramètres de navigation intègres en ajoutant aux paramètres de navigation inertiels, issus de la plateforme inertielle, les erreurs de navigation estimées contenues dans le vecteur d'états du filtre de Kalman; et
- calculer (26) le ou les rayons de protection respectivement associés audit ou auxdits paramètres de navigation intègres en utilisant la matrice de covariance du filtre de Kalman.

2. Procédé selon la revendication 1, dans lequel l'étape consistant à recevoir en entrée du filtrage une mesure de position intègre (20) utilise un système combinant inertie et un système de navigation par satellites.

3. Procédé selon la revendication 1, dans lequel l'étape consistant à recevoir en entrée du filtrage une mesure de position intègre (20) utilise un système d'augmentation spatial.

4. Système de détermination d'au moins un rayon de protection respectivement associé à un paramètre de navigation d'un système hybride de navigation inertielle, comprenant un filtre de Kalman, adapté pour mettre en oeuvre le procédé selon l'une des revendications précédentes.

5. Aéronef comprenant un système selon la revendication 4.


**Patentansprüche**

1. Verfahren zum Bestimmen wenigstens eines Schutzradius, der jeweils mit einem Navigationsparameter eines hybriden Trägheitsnavigationssystems assoziiert ist, durch Kalman-Filterung, das die folgenden Schritte beinhaltet:

- Empfangen, am Filtereingang, eines integrierten Positionsmesswerts (20) und eines Trägheitsmesswerts (21) des hybriden Trägheitsnavigationssystems, umfassend einen Dreiachsen-Beschleunigungsmesswert und einen Dreiachsen-Gyrometriemesswert;
- Erzeugen einer Trägheitsplattform (23) auf der Basis der Trägheitsmesswerte, um wenigstens einen Navigationsparameter aus einem Satz von Parametern zu erhalten, der Position, Geschwindigkeit, Lage und Höhe des hybriden Trägheitsnavigationssystems umfasst;
- Durchführen einer Kalman-Filterung (22), umfassend eine Neueinstellung eines Zustandsvektors, umfassend eine Schätzung der Fehler der ein oder mehreren Navigationsparameter und eine mit diesen Zuständen assoziierte Kovarianzmatrix, eine Ausbreitung des Zustandsvektors, durch Hybridisieren der Trägheitsnavigationsdaten mit der empfangenen integrierten Position mit Hilfe der folgenden iterativen Teilschritte:

- Durchführen einer Neueinstellung (22a) des Zustandsvektors auf der Basis einer Beobachtung der Differenz zwischen dem Trägheitsmesswert und dem integrierten Positionsmesswert, bei der ein Positionsversatz in das Zustandsmodell des Kalman-Filters eingeführt wird, der die mit der am Eingang gemessenen integrierten Position assoziierte Unsicherheit repräsentiert;
- Dekorrelieren (22b) des Zustands des Positionsversatzes aller anderen Zustände mit Hilfe der folgenden Teilschritte:

- Unabhängigmachen des Zustands des Positionsversatzes von den anderen Zuständen bei zwei aufeinanderfolgenden Ausbreitungen durch Verstärken des Modellrauschens des Positionsversatzes;
- Stornieren der in der Matrix des Kalman-Filters vorhandenen Korrelationen dieses Zustands mit allen anderen Zuständen; und

- Neuinitialisieren der Kovarianz des Positionsversatzzustands mit der Messwertunsicherheit der integrierten Position am Eingang;

- Ausbreiten (22c) des Zustandsvektors, bis die mit dem von dem Kalman-Filter geschätzten Positionsfehlerzustand assoziierte Kovarianz gleich der mit dem integrierten Positionsversatz assoziierten Kovarianz ist;

- Berechnen (25) der ein oder mehreren integralen Navigationsparameter durch Addieren der im Zustandsvektor des Kalman-Filters enthaltenen geschätzten Navigationsfehler zu den von der Trägheitsplattform kommenden Trägheitsnavigationsparametern;
- Berechnen (26) der ein oder mehreren Schutzradien, die jeweils mit den ein oder mehreren integrierten Navigationsparametern assoziiert sind, anhand der Kovarianzmatrix des Kalman-Filters.

2. Verfahren nach Anspruch 1, wobei der Schritt des Empfangens eines integrierten Positionsmesswerts (20) am Filtereingang ein Trägheitskombinationssystem und ein Satellitennavigationssystem benutzt.

3. Verfahren nach Anspruch 1, wobei der Schritt des Empfangens eines integrierten Positionsmesswerts (20) am Eingang des Filters ein Raumerweiterungssystem benutzt.

4. System zum Bestimmen wenigstens eines jeweils mit einem Navigationsparameter eines hybriden Trägheitsnavigationssystems assoziierten Schutzradius, umfassend ein Kalman-Filter zum Ausführen des Verfahrens nach einem der vorherigen Ansprüche.

5. Luftfahrzeug, das ein System nach Anspruch 4 umfasst.

**Claims**

1. A method for determining at least one radius of protection respectively associated with a navigation parameter of a hybrid inertial navigation system by Kalman filtering, comprising the following steps:

- receiving, at the filtering input, an integrated position measurement (20) and an inertial measurement (21) of said hybrid inertial navigation system comprising a triaxial accelerometric measurement and a triaxial gyrometric measurement;
- producing an inertial platform (23) on the basis of the inertial measurements in order to obtain at least one navigation parameter from among a set of parameters that comprises the position, the speed, the attitude and the altitude of said hybrid inertial navigation system;
- carrying out Kalman filtering (22) that comprises an adjustment of a state vector that comprises an estimate of the errors of the one or more navigation parameters and a covariance matrix associated with said states, a propagation of the state vector, by hybridising the inertial navigation data with the received integrated position by means of the following iterative sub-steps:

- performing an adjustment (22a) of the state vector based on an observation of the difference between the inertial measurement and the integrated position measurement, in which a position bias is introduced into the states model of the Kalman filter, representing the uncertainty associated with the integrated position measured at the input;
- decorrelating (22b) the state of said position bias of all of the other states by means of the following sub-steps:

- rendering the state of said position bias independent of the other states during two successive propagations by enhancing the model noise of said position bias;
- cancelling the correlations, which are present in the matrix of the Kalman filter, of this state with all of the other states; and
- re-initialising the covariance of the position bias state with the measurement uncertainty of the integrated position at the input;

- propagating (22c) the state vector until the covariance associated with the position error state estimated by the Kalman filter equals the covariance associated with the integrated position bias;

- computing (25) the one or more integral navigation parameters by adding the estimated navigation errors contained in the state vector of the Kalman filter to the inertial navigation parameters coming from said inertial platform;
- computing (26) the one or more radii of protection respectively associated with said one or more integrated navigation parameters by using the covariance matrix of the Kalman filter.

2. The method according to claim 1, wherein said step of receiving, at the filtering input, an integrated position measurement (20) uses an inertia combination system and a satellite navigation system.

3. The method according to claim 1, wherein said step of receiving, at the filtering input, an integrated position measurement (20) uses a space enhancement system.

4. A system for determining at least one radius of protection respectively associated with a navigation parameter of a hybrid inertial navigation system, comprising a Kalman filter adapted to implement the method according to any one of the preceding claims.

5. An aircraft comprising a system according to claim 4.

## FIG.1

## FIG.2

20
21

Mesures positions
intègres

Mesures
inertielles

23

Réalisation plate-forme inertielle

22

Réaliser Filtrage de Kalman

recalage 22a

décorrelation 22b

propagation 22c

Calcul paramètres de
navigation intègres 25

Calcul des rayons de protection
respectivement associés 26

FIG.3

FIG.4

FIG.5

FIG.6

FIG.7

FIG.8

FIG.9

FIG.10

EP 3 018 447 B1

**EP 3 018 447 B1**

## RÉFÉRENCES CITÉES DANS LA DESCRIPTION

### Documents brevets cités dans la description

- US 2014074397 A
- WO 03029755 A1